# EUROPÄISCHE PATENTSCHRIFT

(11) **EP 1 095 830 B1**
(45) Veröffentlichungstag und Bekanntmachung des Hinweises auf die Patenterteilung: **19.07.2006**
(21) Anmeldenummer: 00122506.9
(22) Anmeldetag: 14.10.2000
(51) Int. Cl.: B60S 1/34

(54) **Wischarm für ein Fahrzeug**
Wiper blade for a vehicle
Essuie-glace pour un véhicule

(30) Priorität: 25.10.1999 DE 19951440
(43) Veröffentlichungstag der Anmeldung: 02.05.2001
(73) Patentinhaber: ROBERT BOSCH GMBH, 70442 Stuttgart (DE)
(72) Erfinder: Zimmer, Joachim, 77880 Sasbach (DE)

(56) Entgegenhaltungen:
- EP-A- 0 845 394
- DE-A- 19 604 473
- DE-C- 3 530 108
- FR-A- 2 706 396
- FR-A- 2 736 024
- GB-A- 2 203 934
- GB-A- 2 205 033

## Beschreibung

Die Erfindung betrifft einen Wischarm für ein Fahrzeug, bestehend aus einem Armteil und einem Befestigungsteil, die durch ein Gelenkmittel miteinander derart gelenkverbunden sind, dass eine relative Gelenkbewegung des Armteils und des Befestigungsteils durch ein Anschlagmittel beschränkt ist, entsprechend dem einleitenden Teil des Anspruchs 1.

### Stand der Technik

Es sind Wischarme für Fahrzeuge bekannt, deren Montage am Fahrzeug kompliziert ist, da zu einer korrekten Montage zusätzliche Montagehilfsmittel notwendig sind, welche den Wischarm in einer bestimmten Montagestellung halten. Diese Montagehilfsmittel sind nach erfolgter Montage des Wischarms am Fahrzeug zu entfernen, da sie für einen korrekten Betrieb des Wischarms nicht erforderlich sind, sondern eher ein Hindernis darstellen. Ferner besteht nachteilhafterweise die Möglichkeit, dass nicht korrekt eingebaute und lediglich zur Montage dienende Montagehilfsmittel die Montage des Wischarms am Fahrzeug verzögern beziehungsweise unerwünschte Beschädigungen am Wischarm und/oder Fahrzeug (Fahrzeugscheibe) bei sich unerwartet vom Wischarm lösendem Montagehilfsmittel entstehen können. Nach erfolgter Montage und Beseitigung der Montagehilfsmittel ist der Armteil des Wischarms aus einer Betriebsstellung in eine Abklappstellung schwenkbar, in welcher der Armteil vom Fahrzeug und insbesondere von einer Fahrzeugscheibe nahezu senkrecht nach außen absteht.

Das Dokument FR-A-2736024 offenbart alle Merkmale des Oberbegriffs des Anspruchs 1.

Der bekannte Wischarm weist ein Anschlagmittel aus zwei zueinander beabstandeten Anschlägen und einem Anschlagelement auf, welches mit den zwei Anschlägen bei entsprechender Gelenkbewegung des Armteils und/oder des Befestigungsteils in Wirkkontakt bringbar ist, wobei die Anschläge einteilig mit einem der zwei Teile und das Anschlagelement einteilig mit dem anderen Teil ausgebildet ist. Durch die einteilige Ausbildung der zwei Anschläge und des Anschlagelements an den entsprechenden Teilen (Armteil, Befestigungsteil) des Wischarms wird vermieden, dass zur Positionierung des Wischarms in eine stabile Montagestellung zusätzliche, lösbare und nach erfolgter Montage des Wischarms am Fahrzeug zu entfernende Montagehilfsmittel eingesetzt werden müssen. Hierdurch wird eine einfache, schnelle und sichere Montage des Wischarms an einem Fahrzeug gewährleistet. Durch die Vorsehung von zwei zueinander beabstandeten Anschlägen ist es ferner möglich, einen definierten Schwenkbereich des Armteils in Bezug auf das Befestigungsteil des Wischarms aus einer Montagestellung in eine Abklappstellung festzulegen.

Vorteile der Erfindung Durch die Merkmale des kennzeichnenden Teils des Anspruchs 1 wird sowohl die Montagestellung als auch die Abklappstellung des Armteils aufgrund des Wirkkontakts des Anschlagelements mit dem entsprechenden Anschlag und der Anordnung des Federelementes eine stabile Endposition des verschwenkbaren Armteils des Wischarms darstellen. Bei derart festgelegten Gelenkbegrenzungen des Wischarms ist somit auf einfache Weise eine korrekte Montage des Wischarms (Montagestellung) und ein sicherer Wischblattwechsel (Abklappstellung) am Fahrzeug möglich. Eine bei bekannten Wischarmen notwendige Montage eines Montagehilfsmittels (Zusatzteil) nach der Wischarmherstellung und eine Demontage des Montagehilfsmittels nach der Wischarmmontage am Fahrzeug entfallen somit. Es werden zwei Gelenkbegrenzungen in zwei entgegengesetzte Schwenkrichtungen des Armteils mit einem einzigen Anschlagelement realisiert.

Vorzugsweise ist das Anschlagmittel innerhalb eines Gelenküberdeckungsbereichs des Gelenkmittels angeordnet. Hierdurch wird einerseits eine kompakte Bauweise des Gelenkmittels und andererseits eine von außen nicht ohne weiteres beeinflussbare und/oder sichtbare geometrische Ausgestaltung des Gelenkmittels ermöglicht.

Vorteilhafterweise ist die Gelenkbewegung des Armteils und/oder des Befestigungsteils zwischen der Montagestellung und der Abklappstellung des Wischarms durchführbar. Hierbei dient die Montagestellung zur einfachen und korrekten Montage des Wischarms am Fahrzeug, während die Abklappstellung eine Wischblattwechselposition des Wischarms darstellt. Erfindungsgemäß ist Der Armteil des Wischarms somit aus einer definierten, stabilen Montagestellung gegen eine elastische Rückstellkraft (vorzugsweise als Zugfeder ausgebildetes Federelement zwischen Armteil und Befestigungsteil) in eine definierte, stabile Abklappstellung und wieder zurück in die Montagestellung verschwenkbar.

Mit Vorteil liegt eine Gleichgewichtsstellung des Wischarms zwischen der Montagestellung und der Abklappstellung. Bei der Gleichgewichtsstellung handelt es sich um eine instabile Position des Armteils in Bezug auf das Befestigungsteil, wobei der Armteil in der Gleichgewichtsstellung mit einer elastischen Rückstellkraft eines im Gelenkmittel vorgesehenen Federelements (Zugfeder) beaufschlagt ist. Dadurch, dass die Abklappstellung bei einer Verschwenkung des Armteils von der Montagestellung ausgehend hinter der Gleichgewichtsstellung des Wischarms liegt, wirkt die elastische Rückstellkraft des Federelements in der Abklappstellung, in welchem das Anschlagelement mit dem entsprechenden Anschlag in Wirkkontakt steht, und auch in der Montagestellung stabilisierend auf den Armteil.

Vorteilhafterweise liegt die Betriebsstellung des Wischarms zwischen der Montagestellung und der Gleichgewichtsstellung. Da in der Montagestellung das Anschlagelement mit dem entsprechenden Anschlag in Wirkkontakt steht, ist es vorteilhaft, dass die Betriebsstellung des Armteils von der Montagestellung beabstandet ist, so dass der Wischarm in der Betriebsstellung in zwei entgegengesetzte, senkrecht zur Fahrzeugscheibe stehende Schwenkrichtungen während des Betriebs schwenken kann und somit mit dem zwischenangeordneten Wischblatt unter Wirkung einer gegebenenfalls einstellbaren Andrückkraft des Federelements (Zugfeder) zuverlässig an der Scheibenoberfläche des Fahrzeugs anliegt unabhängig von der jeweiligen Kontur der Scheibenoberfläche.

Gemäß einer bevorzugten Ausführungsform ist das Anschlagelement am Armteil ausgebildet, welcher im Gelenküberdeckungsbereich in Bezug auf das Befestigungsteil außen angeordnet ist. Dadurch, dass das Anschlagelement am Armteil ausgebildet ist, welches gleichzeitig als äußeres Gelenkteil wirkt, ist es möglich, das Anschlagmittel von außen nicht ohne weiteres beeinflussbar und gänzlich unsichtbar auszugestalten. Dies bietet einen Schutz des Anschlagmittels vor äußeren, negativ sich auswirkenden Einflüssen, wie zum Beispiel Verschmutzung und/oder Beschädigung der Kontaktflächen der Anschläge beziehungsweise des Anschlagelements, und ermöglicht eine nach außen homogene und kompakte Ausgestaltung des Gelenküberdeckungsbereichs. Ferner wird bei innenliegendem Anschlagmittel die Verletzungsgefahr, beispielsweise durch Einklemmen eines Fingers zwischen Anschlagelement und Anschlag, erheblich verringert.

Gemäß einer weiteren Ausführungsform ist das Anschlagelement am Befestigungsteil ausgebildet, welches im Gelenküberdeckungsbereich in Bezug auf den Armteil außen angeordnet ist. Auch diese Ausführungsform sieht ein innenliegendes Anschlagmittel mit den oben erwähnten Vorteilen vor.

Mit Vorteil ist das Anschlagmittel einseitig am Gelenkmittel ausgebildet. Bei einer einseitigen Ausbildung des Anschlagmittels am Gelenkmittel werden die Fertigungskosten zur Herstellung des Wischarms herabgesetzt. Dabei ist bevorzugt, dass das Anschlagmittel am Gelenkmittel auf der vom Fahrzeuginnenraum gegenüberliegenden Seite angeordnet ist.

Vorzugsweise ist das Anschlagmittel beidseitig am Gelenkmittel ausgebildet. Durch eine beidseitige Ausbildung des Anschlagmittels am Gelenkmittel wird eine kraftsymmetrische Gelenkhalterung des Armteils am Befestigungsteil ermöglicht. Dabei bieten die in der Montagestellung und in der Abklappstellung beidseitig wirkenden zwei Anschläge und die beidseitig vorgesehenen Anschlagelemente eine zusätzliche Sicherung in Bezug auf ein korrektes und präzises Positionieren des Armteils relativ zum Befestigungsteil.

Mit Vorteil ist das Anschlagelement bei Anschlag als ein auf Biegung beanspruchter, im Gelenküberdeckungsbereich sich ins Innere des Wischarms erstreckender Vorsprung ausgebildet. Bei einem derartigen auf Biegung beanspruchten Anschlagelement wird der Wirkkontakt zwischen Anschlagelement und Anschlag mittels eines Reibkontakts zweier miteinander in Flächenkontakt kommenden und aufeinander abgleitenden, vorzugsweise ebenen Oberflächen erhalten. Hierdurch wird der Armteil in Bezug auf das Befestigungsteil vor Erreichen seiner jeweiligen stabilen Endstellung durch entgegen die jeweilige Schwenkrichtung wirkende Reibkräfte leicht abgebremst. Vorzugsweise wird ein derartiger, am Anschlagelement eine Biegung verursachender Anschlag für die Montagestellung vorgesehen, da der Armteil aus der instabilen Gleichgewichtsstellung mit hoher Geschwindigkeit in die Montagestellung aufgrund der wirkenden verhältnismäßig hohen elastischen Rückstellkräfte (als Zugfeder ausgebildetes Federelement) selbsttätig zurückschwenken kann.

Mit Vorteil ist das Anschlagelement bei Anschlag als ein auf Scherung beanspruchter, im Gelenküberdeckungsbereich sich ins Innere des Wischarms erstreckender Vorsprung ausgebildet. Ein auf Scherung beanspruchtes Anschlagelement tritt mit einer in Bewegungsrichtung gesehen jeweils stirnseitigen Fläche mit dem entsprechenden Anschlag in Wirkkontakt. Es handelt sich hierbei somit nicht um eine durch Kraftschluss zwischen Anschlagelement und Anschlag definierte Begrenzung des Schwenkwegs beziehungsweise des Schwenkwinkels des Armteils, sondern um eine geometrische Begrenzung (Frontalanschlag) des Schwenkwegs beziehungsweise des Schwenkwinkels.

Mit Vorteil ist zwischen den zwei Anschlägen eine kurvenlinienförmige Ausnehmung vorgesehen. Hierdurch wird die Ausbildung eines kompakten und gleichzeitig robusten Anschlagmittels ermöglicht, da die kurvenlinienförmige Ausnehmung an den Schwenkweg des Anschlagelements angepasst werden kann.

Gemäß einer weiteren Ausführungsform ist zwischen den zwei Anschlägen eine geradlinige Ausnehmung vorgesehen. Durch eine geeignet ausgebildete, geradlinige Ausnehmung kann vorteilhafterweise eine Materialeinsparung im Gelenkbereich und eine entsprechende Gewichtsreduzierung des Wischarms unter Gewährleistung einer Mindeststabilität erzielt werden.

Vorteilhafterweise weist das Anschlagelement eine ebene Anschlagfläche auf. Bei einer ebenen Anschlagfläche des Anschlagelements und einem entsprechend ausgebildeten Anschlag wirken die sich bei Wirkkontakt einstellenden Druck- beziehungsweise Reibungskräfte vorteilhafterweise in einem verhältnismäßig großen Oberflächenbereich. Dadurch wird die Möglichkeit einer nicht erwünschten und sich bei höheren Anschlagkräften einstellenden plastischen Verformung der in Wirkkontakt tretenden Elemente herabgesetzt.

Gemäß einer weiteren Ausführungsform weist das Anschlagelement eine gekrümmte Anschlagfläche auf. Bei einer gekrümmten, beispielsweise zylindrischen Anschlagfläche des Anschlagelements und einer ebenen Kontaktfläche der Anschläge ist die effektiv wirkende Anschlagfläche des Anschlagelements und der Anschläge verhältnismäßig klein. Hierbei ist eine zylindrische Anschlagfläche des Anschlagelements besonders vorteilhaft, da aufgrund der rotationssymmetrischen Ausgestaltung der Anschlagfläche keine besonderen Winkelstellungen des Armteils in Bezug auf das Befestigungsteil zum Herstellen eines korrekten Wirkkontakts zwischen Anschlagelement und Anschlag berücksichtigt werden müssen.

Weitere vorteilhafte Ausgestaltungen der Erfindung ergeben sich aus der Beschreibung.

### Zeichnungen

Die Erfindung wird nachfolgend in mehreren Ausführungsbeispielen anhand zugehöriger Zeichnungen näher erläutert. Es zeigen:
- Figur 1: eine schematische, perspektivische Ansicht eines Wischarms;
- Figur 2: eine schematische, perspektivische Ansicht des Gelenkbereichs eines Armteils gemäß einer ersten Ausführungsform;
- Figur 3: eine schematische, perspektivische Ansicht des Gelenkteils eines Armteils gemäß einer zweiten Ausführungsform;
- Figur 4: eine schematische, perspektivische Ansicht des Gelenkteils eines Armteils gemäß einer dritten Ausführungsform;
- Figur 5: eine schematische, teilweise geschnittene Seitenansicht des Gelenkbereichs eines Wischarms gemäß einer vierten Ausführungsform;
- Figur 6: eine schematische, teilweise geschnittene Seitenansicht des Gelenkbereichs eines Wischarms gemäß einer fünften Ausführungsform;
- Figur 7: eine schematische, teilweise geschnittene Seitenansicht des Gelenkbereichs eines Wischarms gemäß einer sechsten Ausführungsform;
- Figur 8: eine schematische Seitenansicht des Gelenkbereichs des Wischarms gemäß Figur 7 in einer Gleichgewichtsstellung;
- Figur 9: eine schematische Seitenansicht des Wischarms gemäß Figur 8 in Abklappstellung;
- Figur 10: eine schematische Seitenansicht des Wischarms gemäß Figur 8 in Betriebsstellung und
- Figur 11: eine schematische Seitenansicht des Wischarms gemäß Figur 8 in Montagestellung.

### Beschreibung der Erfindung

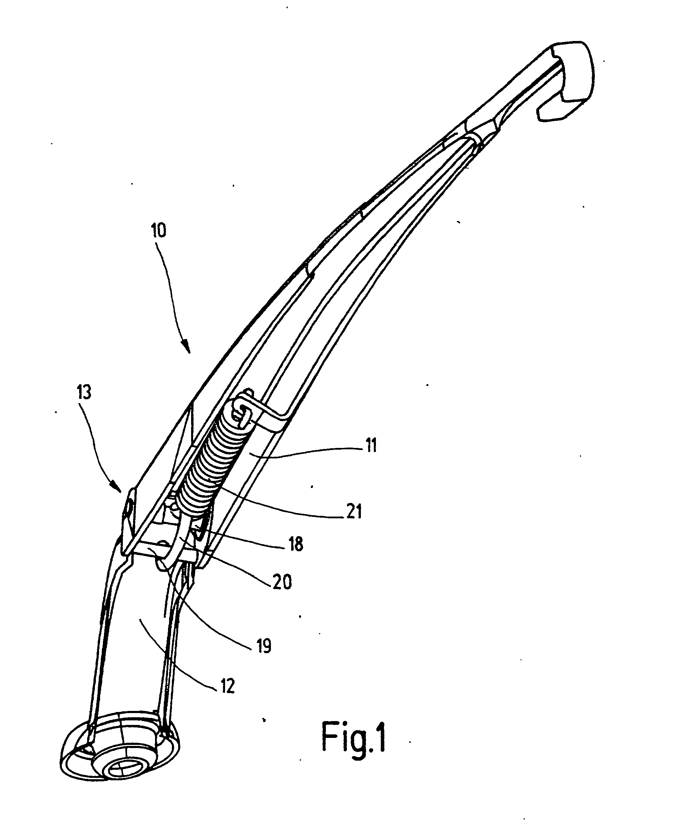

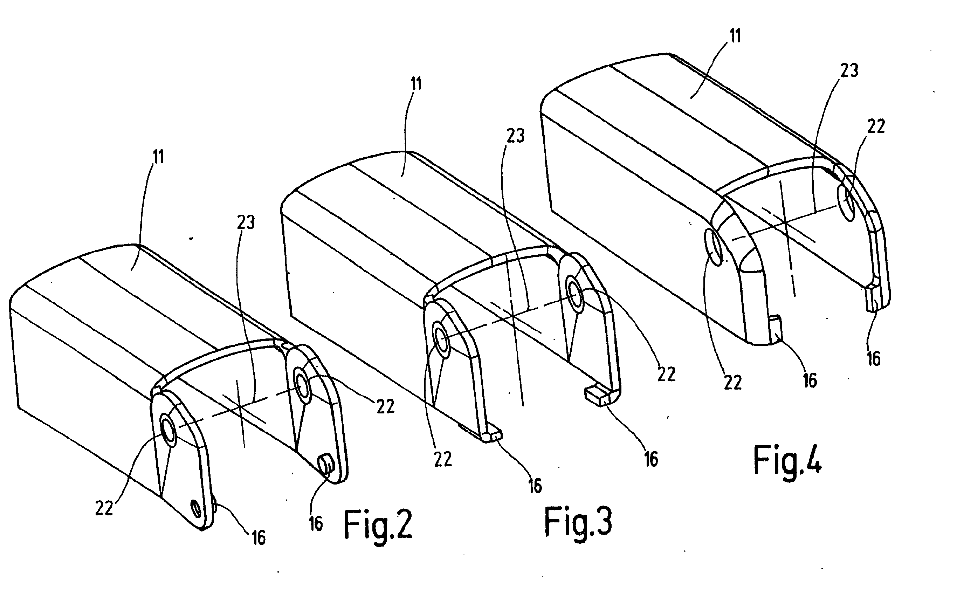

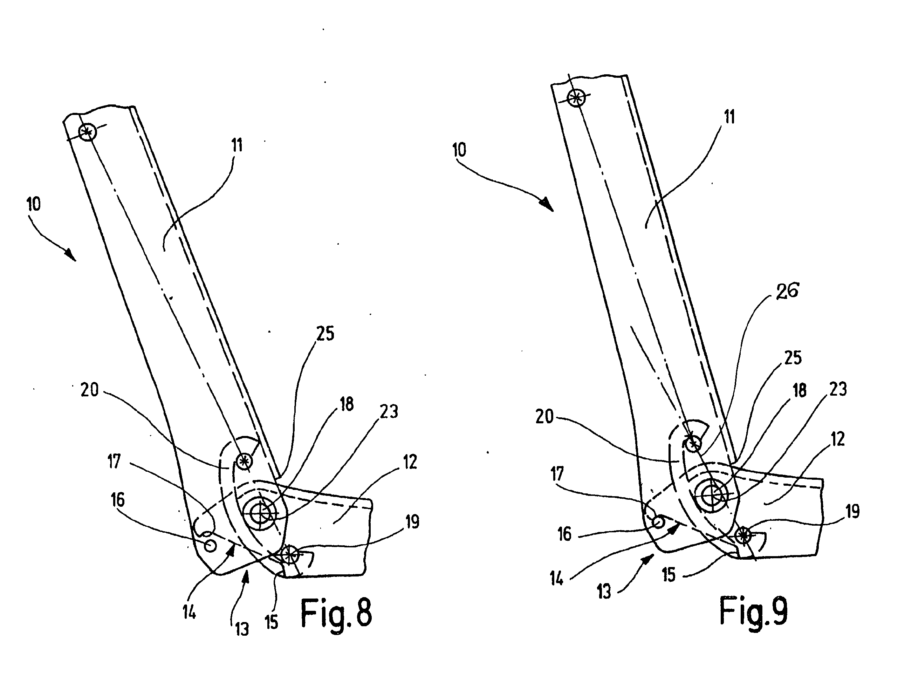

Figur 1 zeigt einen mit 10 bezeichneten Wischarm für ein Fahrzeug (nicht dargestellt), bestehend aus einem Armteil 11 und einem Befestigungsteil 12, die durch ein Gelenkmittel 13 miteinander gelenkverbunden sind. Das Gelenkmittel 13 enthält einen Gelenkbolzen 18, der derart in zwei fluchtende Durchgangsöffnungen 22 des Armteils 11 (siehe Figuren 2 bis 4) und in zwei entsprechend koaxiale Durchgangsbohrungen (siehe Figuren 8 bis 11) des Befestigungsteils 12 gelagert ist, dass eine Verschwenkung des Armteils 11 in Bezug auf das Befestigungsteil 12 (oder umgekehrt) um eine Drehachse 23 gegen eine elastische Rückstellkraft eines als Zugfeder 21 ausgebildeten Federelements möglich ist. Hierzu ist ein C-Bügel 20 mit einem seiner Enden mittels der Zugfeder 21 mit dem Armteil 11 elastisch verbunden und stützt sich mit seinem anderen Ende an einem Nietstift 19 des Befestigungsteils 12 ab.

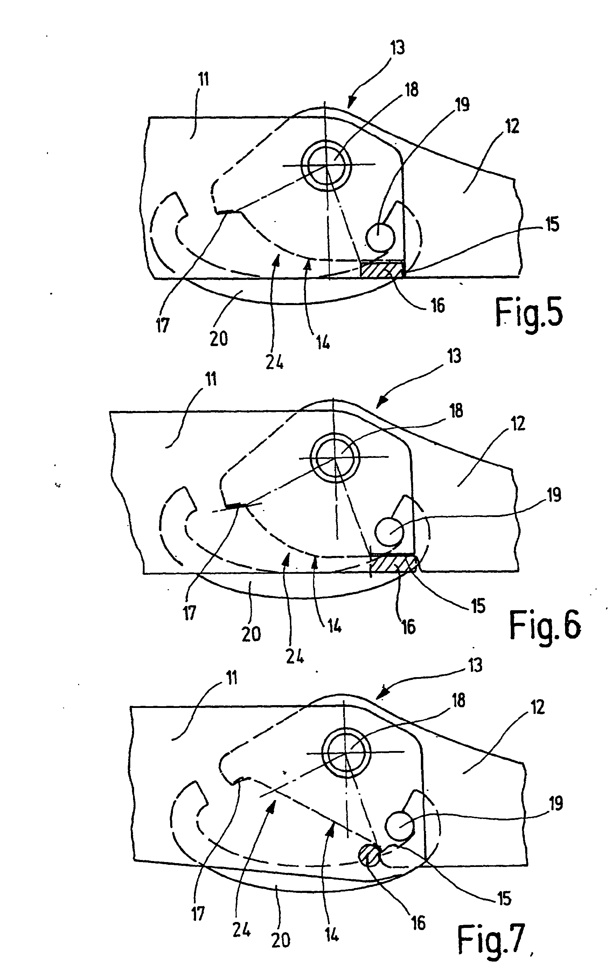

Der Armteil 11 ist im Gelenkbereich inseitig mit zwei gegenüberliegenden, zueinander fluchtenden Anschlagelementen 16 versehen (siehe Figuren 2 bis 4). Diese Anschlagelemente 16 bilden zusammen mit jeweils zwei zugeordneten, zueinander beabstandeten Anschlägen 15, 17 ein Anschlagmittel 14 (siehe Figuren 5 bis 7). Das Anschlagmittel 14 dient dazu, eine relative Gelenkbewegung (Schwenkbewegung) des Armteils 11 und des Befestigungsteils 12 zu beschränken. Hierzu kommt das Anschlagelement 16 mit den zwei zugehörigen Anschlägen 15, 17 bei entsprechender Gelenkbewegung des Armteils 11 (in am Fahrzeug montierter Stellung) und/oder des Befestigungsteils 12 (in nicht montierter Stellung) in Wirkkontakt. Entsprechend der in den Figuren dargestellten Ausführungsform ist das Anschlagelement 16 einteilig mit dem Armteil 11 und sind die zwei Anschläge 15, 17 einteilig mit dem Befestigungsteil 12 ausgebildet. Das Anschlagmittel 14, bestehend aus dem Anschlagelement 16 und den zwei Anschlägen 15, 17, ist innerhalb eines Gelenküberdeckungsbereichs des Gelenkmittels 13 angeordnet. Der Armteil 11 ist im Gelenküberdeckungsbereich in Bezug auf das Befestigungsteil 12 außen angeordnet (siehe auch Figur 1). Das Anschlagelement 16 kann sich gemäß den Ausführungsformen der Figuren 5 und 6 bei einer entsprechenden Schwenkbewegung des Armteils 11 entlang einer kurvenlinienförmigen Ausnehmung 24, welche an die Schwenkbewegung des Anschlagelements 16 angepasst ist, vom Anschlag 15 zum Anschlag 17 hin bewegen. Dagegen ist gemäß Figur 7 die Ausnehmung 24 zwischen den Anschlägen 15 und 17 des Befestigungsteils 12 geradlinig ausgebildet,
wobei bei entsprechender Schwenkbewegung des Armteils 11 das Anschlagelement 16 ungehindert vom Anschlag 15 zum Anschlag 17 hin bewegt werden kann.

In Figur 8 ist der Wischarm 10 in einer Gleichgewichtsstellung dargestellt, bei welcher das Anschlagelement 16 noch nicht mit dem Anschlag 17 in Wirkkontakt getreten und der Armteil 11 somit in zwei entgegengesetzte Schwenkrichtungen bewegbar ist. Diese Gleichgewichtsstellung des Wischarms 10 ist eine instabile Position, das heißt, der Armteil 11 kann aufgrund der wirkenden elastischen Rückstellkraft der Zugfeder 21 (siehe auch Figur 1) bei geringfügiger, äußerer Beeinflussung sowohl im Uhrzeigersinn (siehe Figur 8) in eine Abklappstellung schwenken, bei welcher das Anschlagelement 16 in Wirkkontakt mit dem Anschlag 17 steht, als auch entgegen dem Uhrzeigersinn im nicht eingebauten Zustand in eine Montagestellung schwenken, bei welcher das Anschlagelement 16 mit dem Anschlag 15 in Wirkkontakt steht. In Figur 9 ist die Abklappstellung des Armteils 11 dargestellt, während in Figur 11 die Montagestellung des Wischarms 10 dargestellt ist. Somit befindet sich die Gleichgewichtsstellung (Figur 8) des Wischarms 10 in Bezug auf die Schwenkbewegung des Armteils 11 zwischen der Montagestellung (Figur 11) und der Abklappstellung (Figur 9). Dabei sind die Montagestellung und die Abklappstellung des Wischarms 10 stabile Schwenkpositionen des Armteils 11 in Bezug auf das Befestigungsteil 12, da die Schwenkbewegung durch den Wirkkontakt zwischen dem Anschlagelement 16 und dem entsprechenden Anschlag 15 oder 17 begrenzt wird und die elastische Rückstellkraft der Zugfeder 21 (siehe Figur 1) auf die jeweilige Endstellung stabilisierend wirkt.

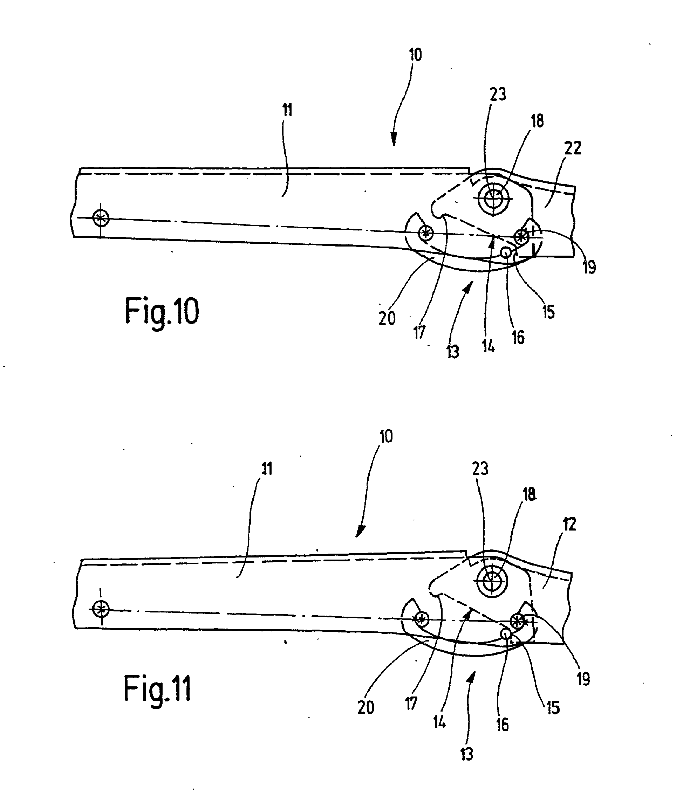

Figur 10 zeigt den Wischarm 10 in einer Betriebsstellung, welche zwischen der Montagestellung (Figur 11) und der Gleichgewichtsstellung (Figur 8) beziehungsweise der Abklappstellung (Figur 9) liegt. In der Betriebsstellung des Wischarms 10 gemäß Figur 10 steht das Anschlagelement 16 nicht in Wirkkontakt mit einem der zwei Anschläge 15, 17. Die Betriebsstellung entspricht einer Position des Armteils 11, wenn selbiger mit einem nicht dargestellten Wischblatt auf einer Fahrzeugscheibe aufliegt. In der Betriebsstellung ist der Armteil 11 mit einer elastischen Rückstellkraft der Zugfeder 21 derart beaufschlagt, dass das Wischblatt kontinuierlich an die Fahrzeugscheibe gedrückt wird. Dabei ist der Armteil 11 in Betriebsstellung in zwei entgegengesetzte, senkrecht zur Fahrzeugscheibe stehende Schwenkrichtungen schwenkbar.

Bezugnehmend auf die Figuren 2 bis 4 werden drei verschiedene Ausführungsbeispiele in Bezug auf die Herstellung und die geometrische Ausgestaltung des Anschlagelements 16 am Armteil 11 dargestellt. Die Anschlagelemente 16 gemäß Figur 2 ragen als zylindrische Zapfen im Gelenküberdeckungsbereich an den Schenkeln des Armteils 11 nach innen vor. Derartige Anschlagelemente 16 können fertigungstechnisch verhältnismäßig einfach mittels einer geeigneten Prägung hergestellt werden. In den Figuren 3 und 4 sind die Anschlagelemente 16 als im Gelenküberdeckungsbereich an den Schenkeln des Armteils 11 umgelegte Laschen ausgebildet. Dabei handelt es sich in Figur 3 um eine an der jeweiligen Seitenwand des im Querschnitt U-förmigen Armteils 11 nach innen ragende Lasche, während Figur 4 zwei in Bezug auf den im Querschnitt U-förmigen Armteil 11 stirnseitig umgelegte Laschen vorgesehen sind. Bei beiden Ausführungsformen gemäß den Figuren 3 und 4 kommen im wesentlichen ebene Flächen des Anschlagelements 16 in Wirkkontakt mit dem entsprechenden Anschlag 15, 17. Die Laschen lassen sich fertigungstechnisch verhältnismäßig einfach mittels einer geeigneten Blechumformung erzeugen. Die Ausnehmungen 24 zwischen den Anschlägen 15, 17 können beispielsweise durch einen geeigneten Blechbeschnitt hergestellt werden.

In Figur 5 ist ein als Lasche ausgebildetes Anschlagelement 16 dargestellt, welches mit dem Anschlag 15 in Wirkkontakt steht. Der Wischarm 10 befindet sich somit gemäß Figur 5 in Montagestellung. Bei dieser Ausführungsform wird das Anschlagelement 16 bei Wirkkontakt mit den Anschlägen 15, 17 jeweils auf Scherung beansprucht.

Auch in Figur 6 ist das Anschlagelement 16 als Lasche ausgebildet und befindet sich mit dem Anschlag 15 in Wirkkontakt. Der Wirkkontakt gemäß dieser Ausführungsform wird nicht wie in Figur 5 mittels einer mit dem Anschlag 15 in Stosskontakt kommenden Stirnfläche erzeugt, sondern mittels einer Kopffläche, welche mit einer entsprechenden Anschlagfläche in Reibkontakt kommt. Somit wird das in Figur 6 dargestellte Anschlagelement 16 bei Wirkkontakt mit dem Anschlag 15 auf Biegung beansprucht. Wenn der Armteil 11 aus der in Figur 6 dargestellten Montagestellung in die Abklappstellung unter Herstellung eines Wirkkontakts zwischen einer ebenen Stirnfläche des Anschlagelements 16 und dem Anschlag 17 geschwenkt wird, wird das Anschlagelement 16 wie in Figur 5 auf Scherung beansprucht.

Bei der Ausführungsform gemäß Figur 7 wird das als zylindrischer Zapfen ausgebildete Anschlagelement 16 bei Herstellung eines Wirkkontakts mit den Anschlägen 15, 17 jeweils auf Scherung beansprucht.

Der Wischarm 10 ist besonders vorteilhaft, da zur Herstellung einer stabilen Montagestellung des Wischarms keine zusätzlichen, lösbaren Montagehilfsmittel notwendig sind. Ferner wird durch das im Gelenküberdeckungsbereich inseitig vorgesehene Anschlagmittel 14, welches eine Schwenkung des Armteils 11 um die Drehachse 23 zwischen einer Montagestellung (Figur 11) und einer Abklappstellung (Figur 9) erlaubt, wobei die Montagestellung und die Abklappstellung den maximalen Schwenkbereich des Armteils 11 in Bezug auf das Befestigungsteil 12 definieren, eine nicht erwünschte Beschädigung der Außenoberfläche des Wischarms 10 aufgrund eines nicht kontrollierten Schwenkens des Armteils 11 vermieden. Derartige Beschädigungen können insbesondere dann auftreten, wenn bei nicht vorhandenem Anschlagmittel 14 der Armteil 11 soweit in Richtung Abklappstellung geschwenkt wird, dass eine im Gelenkbereich liegende freie Kante 25 (siehe Figuren 8 und 9) des im Querschnitt im wesentlichen U-förmigen Armteils 11 in Kollision mit einer gegenüberliegenden Außenoberfläche des Befestigungsteils 12 kommt und somit Lackbeschädigungen beziehungsweise Kratzer oder Markierungen an der Außenoberfläche des Befestigungsteils 12 und/oder des Armteils 11 verursacht werden. Solche Beschädigungen sind optisch nicht zufriedenstellend und können zu einer nicht erwünschten Korrosion der entsprechenden Bauteile führen. Durch die Vorsehung eines Anschlagmittels 14 im Gelenküberdeckungsbereich, wobei die Anschlagmittel 14 vorzugsweise inseitig im Gelenkbereich des Wischarms 10 ausgebildet sind, wird eine derartige unkontrollierte Verschwenkung des Armteils 11 in Bezug auf das Befestigungsteil 12 und die Bildung von Beschädigungen bis hin zu Druckstellen insbesondere am Befestigungsteil 12 vermieden. Aufgrund dieser zuverlässigen und präzisen Positionierung des Armteils 11 in seine beiden stabilen Endstellungen (Montagestellung, Abklappstellung) ist es möglich, den zwischen der freien Kante 25 (siehe Figuren 8 und 9) und der Außenfläche des Befestigungsteils 12 vorliegenden Spalt extrem schmal auszugestalten. In dieser Weise wird ein kompakter und im Gelenkbereich harmonische Übergänge aufweisender Wischarm 10 realisierbar. Ferner können die durch die Zugfeder 21 in den Armteil 11 eingeleiteten elastischen Rückstellkräfte hinsichtlich ihrer Größe frei eingestellt werden, ohne auf eventuelle, zu vermeidende Beschädigungen des Wischarms 10 an seiner Außenfläche Rücksicht nehmen zu müssen. Es kann somit insbesondere in der Abklappstellung eine höhere, stabilisierend auf diese Stellung wirkende, elastische Rückstellkraft eingestellt werden, wodurch eine höhere Haltekraft des Armteils 11 beim Wischblattwechsel erzielt wird und somit der Wischarm 10 in Bezug auf ein unkontrolliertes Zurückschwenken des Armteils 11 in die Betriebsstellung besser gesichert ist. Hierdurch werden eventuelle Beschädigungen der Fahrzeugscheibe durch einen unkontrolliert aus der Abklappstellung zurückschwenkenden Armteil 11 vermieden. Dabei kann der Abklappwinkel so groß gewählt werden, dass das Wischblatt ungehindert unter dem Wischarm 10 herausgedreht werden kann. Die Gelenkkinematik des Wischarms 10 lässt sich ferner mittels entsprechender Einstellung der Federkraft der Zugfeder 21, das heißt unter Erzielung einer hohen Federkraft, zuverlässig optimieren.

Gemäß einer nicht dargestellten, alternativen Ausführungsform können die Anschlagmittel 14 statt verdeckt auch von außen sichtbar angeordnet sein. Ferner kann das Gelenkmittel 13 statt mit beidseitigen Anschlagmitteln 14 lediglich einseitig mit einem entsprechenden Anschlagmittel 14 (Anschlagelement 16, Anschläge 15, 17) versehen sein. Dabei sind die Anschlagmittel 14 vorzugsweise auf der in Bezug auf den Fahrzeuginnenraum gegenüberliegenden Seite des Wischarms 10 angeordnet.

Das Befestigungsteil 12 kann als Gussteil oder als Blechbiegeteil ausgebildet sein, während der Armteil 11 vorzugsweise als Blechbiegeteil ausgebildet ist.

## Patentansprüche

1. Wischarm (10) für ein Fahrzeug, bestehend aus zwei Teilen (11,12), nämlich einem Armteil (11) und einem Befestigungsteil (12), die durch ein Gelenkmittel (13) aufweisend eine Drehachse (23) miteinander derart gelenkverbunden sind, dass eine relative Gelenkbewegung des Armteils (11) und des Befestigungsteils (12) durch ein Anschlagmittel (14) beschränkt ist, wobei das Anschlagmittel (14) aus einem Anschlagelement (16) und zwei entlang eines Bewegungsweges des Anschlagelements (16) zueinander beabstandeten Anschlägen (15,17) besteht und das Anschlagelement (16) mit den zwei Anschlägen (15,17) bei entsprechender Gelenkbewegung des Armteils (11) und/oder des Befestigungsteils (12) in Wirkkontakt bringbar ist, wobei die Anschläge (15,17) einteilig mit einem der zwei Teile (11;12) und das Anschlagelement (16) einteilig mit dem anderen Teil (12;11) ausgebildet ist, ferner aufweisend ein zwischen Armteil (11) und Befestigungsteil (12) wirkendes Federelement (21), **dadurch gekennzeichnet, dass** das Federelement (21) mittels seiner elastischen Rückstellkraft das Armteil (11) in einer Montagestellung und in einer Abklappstellung stabilisiert und dass die Wirklinie (26) des Federelements (21) in der Abklappstellung sich auf der einen Seite der Drehachse (23) befindet, während das Anschlagelement (16) und ein Anschlag (17) auf der anderen Seite angeordnet sind.

2. Wischarm nach Anspruch 1, **dadurch gekennzeichnet, dass** das Anschlagmittel (14) innerhalb eines Gelenküberdeckungsbereichs des Gelenkmittels (13) angeordnet ist.

3. Wischarm nach einem der vorhergehenden Ansprüche, **dadurch gekennzeichnet, dass** die Gelenkbewegung des Armteils (11) und/oder des Befestigungsteils (12) zwischen der Montagestellung und der Abklappstellung des Wischarms (10) durchführbar ist.

4. Wischarm nach einem der vorhergehenden Ansprüche, **dadurch gekennzeichnet, dass** eine Gleichgewichtsstellung des Wischarms (10) zwischen der Montagestellung und der Abklappstellung liegt.

5. Wischarm nach einem der vorhergehenden Ansprüche, **dadurch gekennzeichnet, dass** eine Betriebsstellung des Wischarms (10) zwischen der Montagestellung und der Gleichgewichtsstellung liegt.

6. Wischarm nach einem der vorhergehenden Ansprüche, **dadurch gekennzeichnet, dass** das Anschlagelement (16) am Armteil (11) ausgebildet ist, welcher im Gelenküberdeckungsbereich in Bezug auf das Befestigungsteil (12) außen angeordnet ist.

7. Wischarm nach einem der vorhergehenden Ansprüche, **dadurch gekennzeichnet, dass** das Anschlagelement (16) am Befestigungsteil (12) ausgebildet ist, welches im Gelenküberdeckungsbereich in Bezug auf den Armteil (11) außen angeordnet ist.

8. Wischarm nach einem der vorhergehenden Ansprüche, **dadurch gekennzeichnet, dass** das Anschlagmittel (14) einseitig am Gelenkmittel (13) ausgebildet ist.

9. Wischarm nach einem der vorhergehenden Ansprüche, **dadurch gekennzeichnet, dass** das Anschlagmittel (14) beidseitig am Gelenkmittel (13) ausgebildet ist.

10. Wischarm nach einem der vorhergehenden Ansprüche, **dadurch gekennzeichnet, dass** das Anschlagelement (16) bei Anschlag als ein auf Biegung beanspruchter, im Gelenküberdeckungsbereich sich ins Innere des Wischarms (10) erstreckender Vorsprung ausgebildet ist.

11. Wischarm nach einem der vorhergehenden Ansprüche, **dadurch gekennzeichnet, dass** das Anschlagelement (16) bei Anschlag als ein auf Scherung beanspruchter, im Gelenküberdeckungsbereich sich ins Innere des Wischarms (10) erstreckender Vorsprung ausgebildet ist.

12. Wischarm nach einem der vorhergehenden Ansprüche, **dadurch gekennzeichnet, dass** zwischen den zwei Anschlägen (15,17) eine kurvenlinienförmige Ausnehmung (24) vorgesehen ist.

13. Wischarm nach einem der vorhergehenden Ansprüche, **dadurch gekennzeichnet, dass** zwischen den zwei Anschlägen (15,17) eine geradlinige Ausnehmung (24) vorgesehen ist.

14. Wischarm nach einem der vorhergehenden Ansprüche, **dadurch gekennzeichnet, dass** das Anschlagelement (16) eine ebene Anschlagfläche aufweist.

15. Wischarm nach einem der vorhergehenden Ansprüche, **dadurch gekennzeichnet, dass** das Anschlagelement (16) eine gekrümmte Anschlagfläche aufweist.

## Claims

1. Wiper arm (10) for a vehicle, comprising two parts (11, 12), namely an arm part (11) and a fastening part (12), which are connected in an articulated manner to each other by an articulation means (13) having an axis of rotation (23) such that a relative articulated movement of the arm part (11) and of the fastening part (12) is limited by a stop means (14), the stop means (14) comprising a stop element (16) and two stops (15, 17) spaced apart from each other along a path of movement of the stop element (16), and the stop element (16) can be brought into operative contact with the two stops (15, 17) upon a corresponding articulated movement of the arm part (11) and/or of the fastening part (12), the stops (15, 17) being formed integrally with one of the two parts (11; 12) and the stop element (16) being formed integrally with the other part (12; 11), furthermore having a spring element (21) acting between arm part (11) and fastening part (12), **characterized in that** the spring element (21), by means of its elastic restoring force, stabilizes the arm part (11) in an installation position and in a folded-down position, and **in that**, in the folded-down position, the line of action (26) of the spring element (21) is situated on one side of the axis of rotation (23) while the stop element (16) and a stop (17) are arranged on the other side.

2. Wiper arm according to Claim 1, **characterized in that** the stop means (14) is arranged within an articulation overlapping region of the articulation means (13).

3. Wiper arm according to one of the preceding claims, **characterized in that** the articulated movement of the arm part (11) and/or of the fastening part (12) can be carried out between the installation position and the folded-down position of the wiper arm (10).

4. Wiper arm according to one of the preceding claims, **characterized in that** a position of equilibrium of the wiper arm (10) is situated between the installation position and the folded-down position.

5. Wiper arm according to one of the preceding claims, **characterized in that** an operating position of the wiper arm (10) is situated between the installation position and the position of equilibrium.

6. Wiper arm according to one of the preceding claims, **characterized in that** the stop element (16) is formed on the arm part (11) which, in the articulation overlapping region, is arranged on the outside with respect to the fastening part (12).

7. Wiper arm according to one of the preceding claims, **characterized in that** the stop element (16) is formed on the fastening part (12) which, in the articulation overlapping region, is arranged on the outside with respect to the arm part (11).

8. Wiper arm according to one of the preceding claims, **characterized in that** the stop means (14) is formed on one side of the articulation means (13).

9. Wiper arm according to one of the preceding claims, **characterized in that** the stop means (14) is formed on both sides of the articulation means (13).

10. Wiper arm according to one of the preceding claims, **characterized in that** the stop element (16) in the case of the stop is designed as a projection which is subjected to a bending stress and extends in the articulation overlapping region into the interior of the wiper arm (10).

11. Wiper arm according to one of the preceding claims, **characterized in that** the stop element (16) in the case of the stop is designed as a projection which is subjected to a shearing stress and extends in the articulation overlapping region into the interior of the wiper arm (10).

12. Wiper arm according to one of the preceding claims, **characterized in that** a recess (24) in the shape of a curved line is provided between the two stops (15, 17).

13. Wiper arm according to one of the preceding claims, **characterized in that** a rectilinear recess (24) is provided between the two stops (15, 17).

14. Wiper arm according to one of the preceding claims, **characterized in that** the stop element (16) has a planar stop surface.

15. Wiper arm according to one of the preceding claims, **characterized in that** the stop element (16) has a curved stop surface.

## Revendications

1. Bras d'essuie-glace (10) pour un véhicule composé de deux parties (11, 12), à savoir une partie de bras (11) et une partie de fixation (12) reliées de manière articulée par un moyen d'articulation (13) muni d'un axe d'articulation (23),
le mouvement relatif d'articulation de la partie de bras (11) et de la partie de fixation (12) étant limité par un moyen de butée (14),
le moyen de butée (14) se composant d'un élément de butée (16) et de deux butées (15, 17) écartées l'une de l'autre le long du chemin de déplacement de l'élément de butée (16), et
l'élément de butée (16) peut être mis en contact de coopération avec les deux butées (15, 17) pour un mouvement d'articulation correspondant de la partie de bras (11) et/ou de la partie de fixation (12),
les butées (15, 17) étant réalisées en une seule pièce avec l'une des deux parties (11, 12) et l'élément de butée (16) en une seule pièce avec l'autre partie (12, 11),
ainsi qu'un élément de ressort (21) agissant entre la partie de bras (11) et la partie de fixation (12),
**caractérisé en ce que**
l'élément de ressort (21) stabilise par sa force élastique de rappel, la partie de bras (11) en position de montage et en position de basculement, et
la ligne d'action (26) de l'élément de ressort (21) en position de basculement se trouve d'un côté de l'axe de rotation (23) alors que l'élément de butée (16) et une butée (17) se trouvent de l'autre côté.

2. Bras d'essuie-glace selon la revendication 1,
**caractérisé en ce que**
le moyen de butée (14) est situé dans la zone de recouvrement du moyen d'articulation (13).

3. Bras d'essuie-glace selon l'une des revendications précédentes,
**caractérisé en ce que**
le mouvement d'articulation de la partie de bras (11) et/ou de la partie de fixation (12) se fait entre la position de montage et la position basculée du bras (10).

4. Bras d'essuie-glace selon l'une des revendications précédentes,
**caractérisé en ce qu'**
une position intermédiaire d'équilibre du bras (10) se situe entre la position de montage et la position basculée.

5. Bras d'essuie-glace selon l'une des revendications précédentes,
**caractérisé en ce qu'**
une position de fonctionnement du bras d'essuie-glace (10) se trouve entre la position de montage et la position d'équilibre.

6. Bras d'essuie-glace selon l'une des revendications précédentes,
**caractérisé en ce que**
l'élément de butée (16) est réalisé sur la partie de bras (11) qui est située à l'extérieur par rapport à la partie de fixation (12) dans la zone de recouvrement de l'articulation.

7. Bras d'essuie-glace selon l'une quelconque des revendications précédentes,
**caractérisé en ce que**
l'élément de butée (16) est réalisé sur la pièce de fixation (12) prévue à l'extérieur par rapport à la partie de bras (11) dans la zone de recouvrement de l'articulation.

8. Bras d'essuie-glace selon l'une quelconque des revendications précédentes,
**caractérisé en ce que**
le moyen de butée (14) est réalisé d'un côté sur le moyen d'articulation (13).

9. Bras d'essuie-glace selon l'une quelconque des revendications précédentes,
**caractérisé en ce que**
le moyen de butée (14) est réalisé sur les deux côtés du moyen d'articulation (13).

10. Bras d'essuie-glace selon l'une quelconque des revendications précédentes,
**caractérisé en ce que**
l'élément de butée (16) est réalisé sous la forme d'une partie en saillie s'étendant à l'intérieur du bras d'essuie-glace (10) dans la zone de recouvrement de l'articulation, cette partie en saillie étant sollicitée en flexion au moment de la venue en butée.

11. Bras d'essuie-glace selon l'une quelconque des revendications précédentes,
**caractérisé en ce que**
l'élément de butée (16) est réalisé sous la forme d'une partie en saillie s'étendant à l'intérieur du bras d'essuie-glace (10) dans la zone de recouvrement de l'articulation et il est sollicité en cisaillement lors de la venue en butée.

12. Bras d'essuie-glace selon l'une quelconque des revendications précédentes,
**caractérisé par**
une cavité (24) en forme de chemin de came entre les deux butées (15, 17).

13. Bras d'essuie-glace selon l'une quelconque des revendications précédentes,
**caractérisé par**
une cavité droite (24) entre les deux butées (15, 17).

14. Bras d'essuie-glace selon l'une quelconque des revendications précédentes,
**caractérisé en ce que**
l'élément de butée (16) présente une surface de butée plane.

15. Bras d'essuie-glace selon l'une quelconque des revendications précédentes,
**caractérisé en ce que**
l'élément de butée (16) présente une surface de butée courbe.
